# EUROPÄISCHE PATENTSCHRIFT

(11) **EP 0 832 728 B1**
(45) Veröffentlichungstag und Bekanntmachung des Hinweises auf die Patenterteilung: **02.05.2002**
(21) Anmeldenummer: 97250295.9
(22) Anmeldetag: 30.09.1997
(51) Int. Cl.: B29C 45/17, B29C 45/84

(54) **Verfahren und Vorrichtung zum Positionieren von Formwerkzeugen**
Method and apparatus for positioning moulds
Procédé et dispositif pour le positionnement de moules

(30) Priorität: 30.09.1996 DE 19641578
(43) Veröffentlichungstag der Anmeldung: 01.04.1998
(73) Patentinhaber: Demag Ergotech GmbH, 90571 Schwaig (DE)
(72) Erfinder: Bertleff, Wolfgang, Dipl.-Ing., 91058 Erlangen (DE)
(74) Vertreter: Meissner, Peter E., Dipl.-Ing.

(56) Entgegenhaltungen:
- EP-A- 0 069 919
- DE-A- 3 714 635
- US-A- 3 712 779

## Beschreibung

Die Erfindung betrifft ein Verfahren zum Positionieren von Formwerkzeugen in der Schließeinheit einer eine feststehende und eine bewegliche Werkzeugaufspannplatte aufweisenden Spritzgießmaschine mit kraftschlüssiger, insbesondere magnetischer Werkzeugspanneinrichtung.

Aus dem Prospekt TECNOMAGNETE "QUAD-PRESS" ist ein Sicherheitssystem bekannt, das mit Näherungsschaltern ausgestattet ist, die mit der Maschinensteuerung verbunden sind. Dieses Sicherheitssystem unterbricht den Bearbeitungsprozeß, wenn die Oberflächen der Formhälften von der magnetischen Fläche sich lösen bzw. wenn Verunreinigungen zwischen die Flächen des Magneten und der Formwerkzeughälfte gelangen.

Dieses System ist nicht in der Lage, die einzelnen Formwerkzeughälften bei nicht ausreichender Haltekraft in sicherer Position zu halten.

Aus der DE 37 11 080 A1 ist ein Verfahren und eine Vorrichtung zum Wechseln der Formwerkzeuge in der Schließeinheit von Spritzgießmaschinen bekannt. Weiterhin enthält diese Schrift einen Hinweis auf einen halbautomatischen Wechsel der Formwerkzeuge mittels eines Krans oder eines ähnlichen Hebezeugs, bei dem der Ein- bzw. Ausbau von ober her durchgeführt wird. Es fehlt aber jeglicher Hinweis auf eine Betriebsweise bei dem Einsatz von kraftschlüssigen Werkzeugspanneinrichtungen.

Die Erfindung hat sich das Ziel gesetzt, ein Verfahren mit entsprechender Vorrichtung aufzuzeigen, wobei während der Außer Betrieb-Phase einer kraftschlüssigen Werkzeugspanneinrichtung ein sicheres Führen und Halten auch im Störungsfall gegeben ist.

Die Erfindung erreicht dieses Ziel mit einem verfahren gemäß Anspruch 1 sowie einer spritzgießmaschine gemäß Anspruch 4, indem sie bei abgeschalteter kraftschlüssiger Werkzeugeinspannung im wesentlichen beim Werkzeugwechsel die einzelnen Formwerkzeughälften kippfrei ablegt und während des Betriebes bei eventuellen spontanem Ausfall der kraftschlüssigen Werkzeugspanneinrichtung die einzelnen Formwerkzeughälften kippfrei aufhängt.

Die kraftschlüssigen Werkzeugspannsysteme für Spritzgießmaschinen, zu denen die Permanent-Magnetspannsysteme zählen, haben den Vorteil:
a) einer weitgehend freizügigen Größengestaltung der Werkzeugaufspannplatten
b) des schnellen Spannens bzw. Entspannens
c) bei magnetischen Spannsystem des geringen Energiebedarfs nur zum Spannen bzw. Entspannenvorgang
d) der Weiterverwendung vorhandener Werkzeuge, soweit sie ausreichend plane, ferromagnetische Aufspannplatten aufweisen.

Die kraftschlüssigen Werkzeugaufspanneinrichtungen einschließlich der magnetischen sind aber mit dem Nachteil behaftet, daß die Spannkraft direkt abhängig von der Berührungsfläche zwischen Werkzeug und der Werkzeugaufspannplatte ist. Nicht nur geringe Plattenunebenheiten, sondern auch insbesondere Verschmutzung, Senkungen oder auch Fasen reduzieren die Berührungsfläche und damit die verfügbare Spannkraft. So kann bei magnetischen Werkzeugspanneinrichtungen die Magnetspannkraft bereits bei einem Plattenabstand von ca. 0,2 mm erheblich nachlassen. Erfindungsgemäß sind an den Formwerkzeughälften Halterungen vorgesehen, die formschlüssige Fangelemente greifen können, welche mit den Werkzeugaufspannplatten in Verbindung stehen. Die Halterungen sind dabei so ausgestaltet, daß der Gesamtschwerpunkt der einzelnen Formwerkzeughälften berücksichtigt wird und diese nicht nur beim Transport, sondern auch bei eventuellem spontanen Abfall der Spannkraft des Werkzeugspannsystems weder herabfallen noch kippen.

Als Fangelemente werden Holme vorgeschlagen, die ggf. bei den Holmenmaschinen bereits vorhanden sind. Bei Zweiplattenmaschinen könnten diese als reine Fangholme eingerichtet werden. In einer vorteilhaften Ausgestaltung können insbesondere bei holmlosen Maschinen Tragarme oder auch bewegliche mit einer Nase versehenen Elemente als Fangeinrichtung ausgestaltet sein.

Zwischen den Halterungen und den Fangelementen sind Lager in Form von Rollenoder auch Gleitlagern vorgesehen. Diese Lager erlauben eine Horizontalbewegung in Hauptachsrichtung und ermöglichen nicht nur das behinderungsfreie Spannen des Werkzeugspannsystems, sondern auch ein sicheres Aufreißen der Formwerkzeughälften ohne Zerstörung bzw. Beschädigung der Werkzeugaufspannplatten.

Das Werkzeug kann sowohl vertikal wie auch horizontal in den Freiraum zwischen den Werkzeugaufspannplatten gebracht werden. Bei mit Holmen versehenen Spritzgießmaschinen sind vorteilhafte Weiterbildungen der Erfindung dargelegt, bei denen die Halterungen in der Weise ausgeführt sind, daß sie während des im wesentlichen horizontalen Werkzeugwechsels in den Arbeitsraum gebracht werden können und dann die Fangelemente funktionsbereit zu positionieren.

Um den Verschleiß zu mindern und Beschädigungen der Fangvorrichtungen möglichst auszuschließen, sind zwischen den Halteelementen und den Fangeinrichtungen Dämpfungen vorgesehen. Diese können als Federn aber auch als Kolben-Zylinder-Einheiten ausgestaltet sein, wobei die letzteren noch verstellbar sind und so eingestellt werden, daß insbesondere bei einem Störungsfall nur eine geringe Fallhöhe zugelassen wird.

In einer vorteilhaften Ausgestaltung ist vorgesehen, ein Spuränderungsteil an den Halterungen vorgesehen, mit denen das Werkzeug beim Einbau parallel zu den Formaufspannplatten ausgerichtet und geführt werden kann.

Ein Beispiel der Erfindung ist in der beiliegenden Zeichnung dargelegt. Dabei zeigen die
- Figur 1: Eine Schließeinheit einer Spritzgießmaschine mit vier Holmen
- Figur 2: Eine Schließeinheit einer holmlosen Spritzgießmaschine
- Figur 3: Höhenverstellbare Aufhängung
- Figur 4: Dreh- und verschiebbare Einzelhalterung
- Figur 5: Dreh- und verschiebbare Traverse
- Figur 6: Tragarm als Fangelement
- Figur 7: Klaue als Fangelement

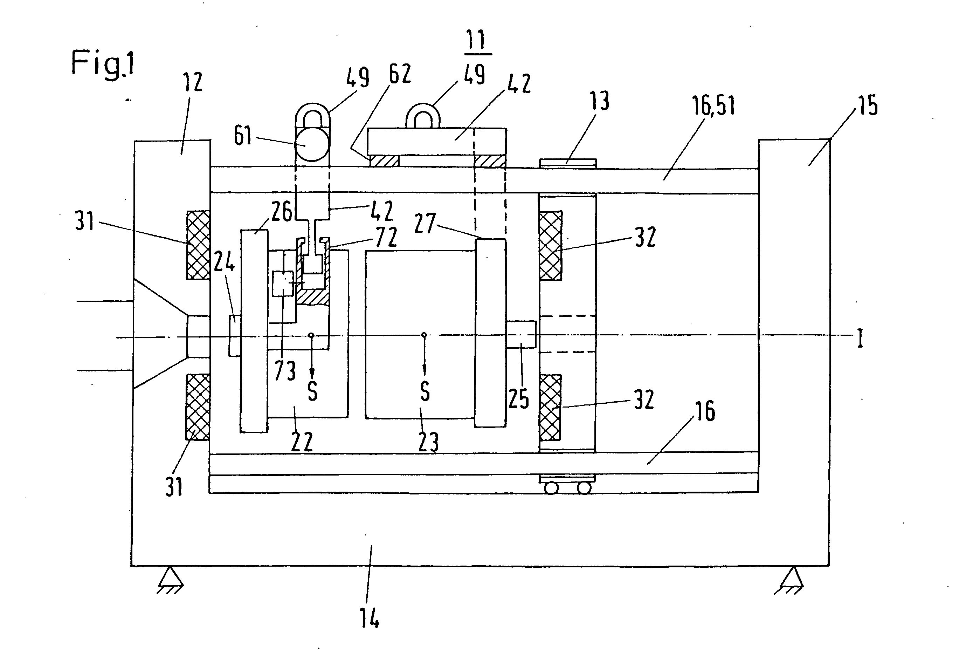

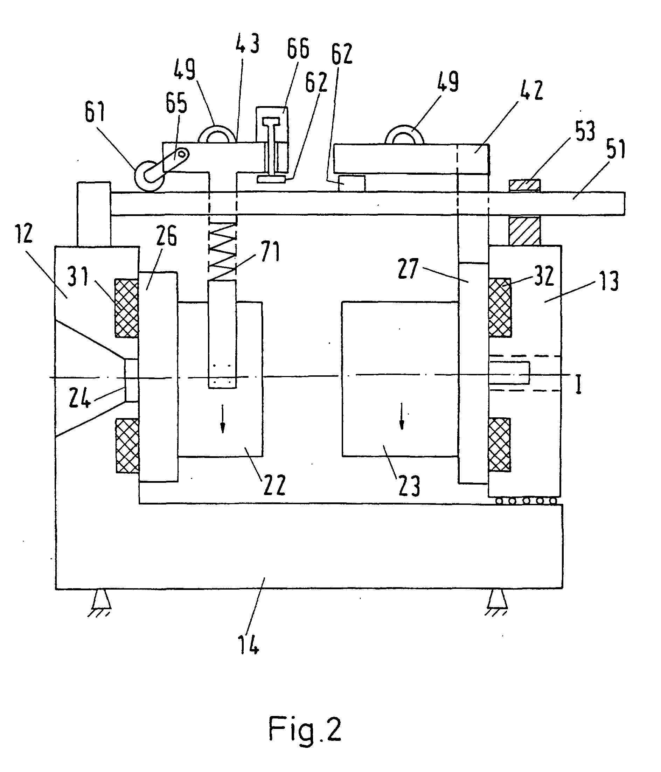

Die Figuren 1, 2, 6 und 7 zeigen jeweils Schließeinheiten 11 einer Spritzgießmaschine mit einer feststehenden Werkzeugaufspannplatte 12, die mit einem Werkzeugtisch 14 verbunden ist, und einer beweglichen Werkzeugaufspannplatte 13. In den Figuren 1 und 2 sind Holme 51 vorgesehen, wobei bei der Figur 1, die darüber hinaus eine Gegenplatte 15 aufweist, die bereits vorhandenen Holme 16 als Fangelemente Verwendung finden.

Die Werkzeugaufspannplatten 12 und 13 besitzen magnetische Werkzeugspanneinrichtungen 31, 32, die mit Werkzeugspannplatten 26, 27 kraftschlüssig in Verbindung bringbar sind.

Die Magnetisiereinrichtung für die Magnete 31, 32 ist hier nicht weiter dargestellt.

Die Werkzeugspannplatte 26 ist mit der Formwerkzeughälfte 22 verbunden und weist darüber hinaus eine Zentrierung 24 auf. Die Werkzeugaufspannplatte 27 ist mit der Formwerkzeughälfte 23 verbunden und besitzt eine Auswerferstange 25.

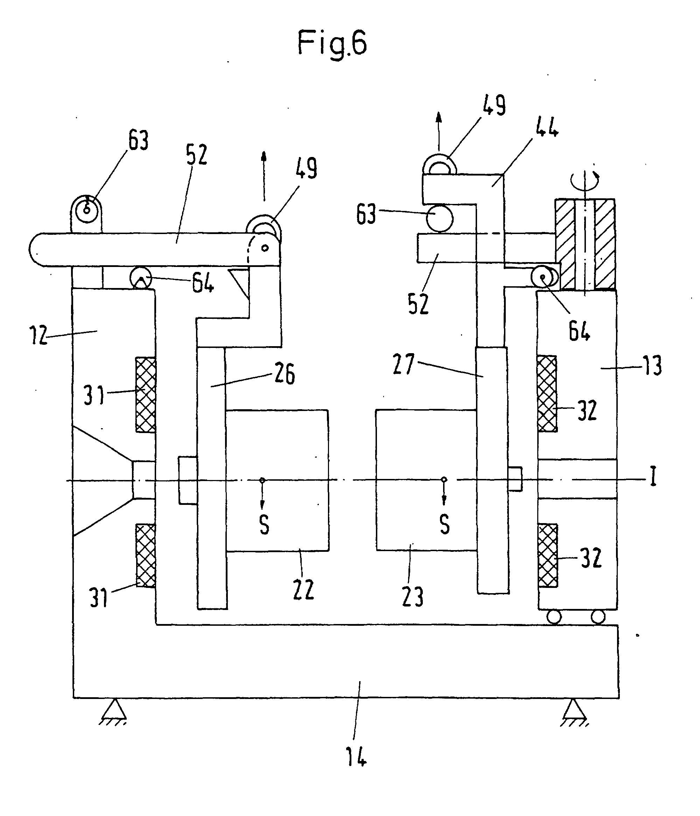

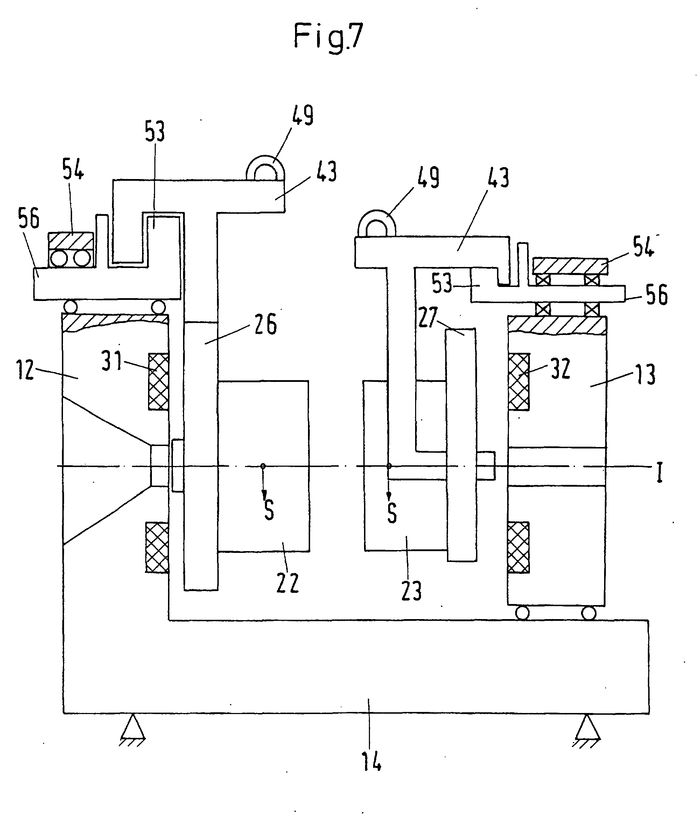

An den einzelnen Formwerkzeughälften 22, 23 oder Werkzeugaufspannplatten 26, 27 sind Laschen als Halterungen befestigt, und zwar
- L-Laschen 42 in der Figur 1 links und rechts, in der Figur 2 im rechten Teil des Bildes
- T-Laschen 43 in der Figur 2 im linken Teil und in der Figur 7 auf beiden Seiten
- Z-Lasche 44 in der Figur 6 zu beiden Seiten.

Bei sämtlichen Laschen ist eine Schlaufe 49 vorgesehen zum Eingreifen eines Kranhakens für den Transport. Der Buchstabe S zeigt den Schwerpunkt der Formwerkzeughälften 22, 23.

In den Figuren 1 und 2 sind zwischen den Holmen 51 und den Laschen 42, 46 entweder Rollenlager 61 oder Gleitlager 62 vorgesehen.

In der Figur 1 besitzt die L-Lasche 42 eine Kolben-Zylinder-Einheit 72 als Dämpfungselement, das an einen Aktuator 73 angeschlossen ist.

In der Figur 2 ist im linken Teil der Figur das Dämpfungselement eine Feder 71 vorgesehen. Weiterhin sind die Lagerelemente 61, 62 höhenverstellbar, und zwar durch eine Schwenkeinrichtung 65 bei der Rollenlagerung 61 und ein Längenänderungsteil 66 bei der Gleitlagerung 62. Bei der Figur 2, die eine Zweiplattenmaschine zeigt werden die Holme 51 ausschließlich als Fangelement verwendet. Die Spritzgießmaschine besitzt auf der beweglichen Werkzeugaufspannplatte 13 ein Loslager 53, das mit dem Holm 51, der an der feststehenden Werkzeugaufspannplatte 12 befestigt ist, korrespondiert.

Die einzelnen Laschen sind entsprechend ihrer Ausgestaltung so befestigt und auf den Fangelementen in der Weise abgestützt, daß sowohl während des Transportes wie auch während des Einbaus in die Schließeinheit und nach spontanem Abfall der kraftschlüssigen Spanneinrichtung ein Kippen der Formwerkzeughälfte unterbleibt. Dabei kann die L-förmige Lasche entweder an der Werkzeugspannplatte 26 am Kopfende befestigt sein, wobei der eine Schenkel der Lasche über mindestens ein Lager 61 oder 62 auf dem Fangelement 51, 52 sich abstützt. Es kann aber auch die L-Lasche 42 in Höhe der Hauptachse I an der Werkzeugspannplatte 12, 13 befestigt sein, um dann mit dem zweiten Schenkel im Wirkbereich des Schwerpunktes zu dem Fangelement 51, 52 geführt zu werden.

Die T-förmige Lasche 43 ist vorzugsweise im Schwerpunkt der Formwerkzeughälfte 22, 23 befestigt und stützt sich regelmäßig über zwei Lager 61, 62 auf den Fangelementen 51, 52 ab, wie im Beispiel der Figur 2, linker Teil des Bildes gezeigt.

Von Z-förmiger Lasche 44 wird gesprochen, wenn diese Halterung entweder mit einem auf eine Werkzeugspannplatte 12 befestigten Tragarm 52 korrespondiert oder der Tragarm 52 winkelbeweglich mit der Halterung verbunden ist und mit kopfendig an einer Werkzeugaufspannplatte 12 angeordenten Ober- bzw. Unterlagerung 63, 64 korrespondierten. In beiden Fällen greift jeweils ein Lager 63 den Tragarm 52 von oben und ein zweites Lager 64 den Tragarm 52 von unten und übernimmt somit das Kippmoment.

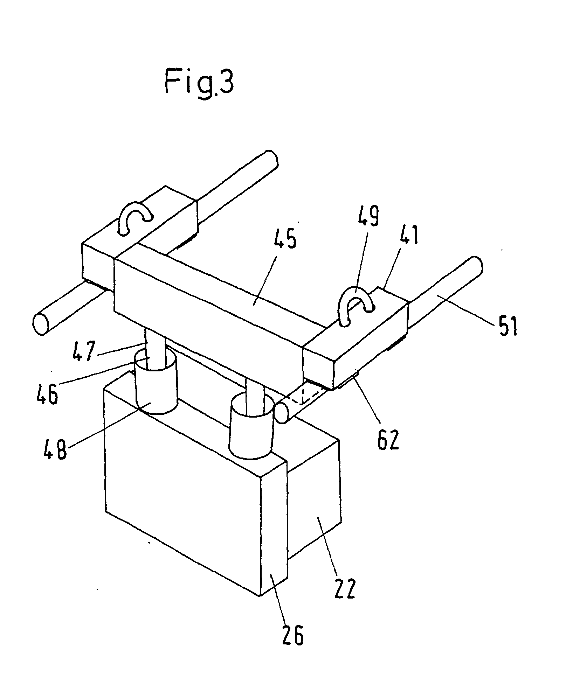

Die Figur 3 zeigt eine Traverse 45, an der beidendig Laschen 41 angebracht sind, die über Gleitlager 62 sich auf Holmen 51 abstützen. Die Traverse 45 ist über eine Aufhängung 46, die ein hülsenförmiges Bauteil 48 besitzt, in dem ein stangenförmiges Bauteil 47 in Längsrichtung verstellbar ist, mit der Werkzeugspannplatte 26 verbunden.

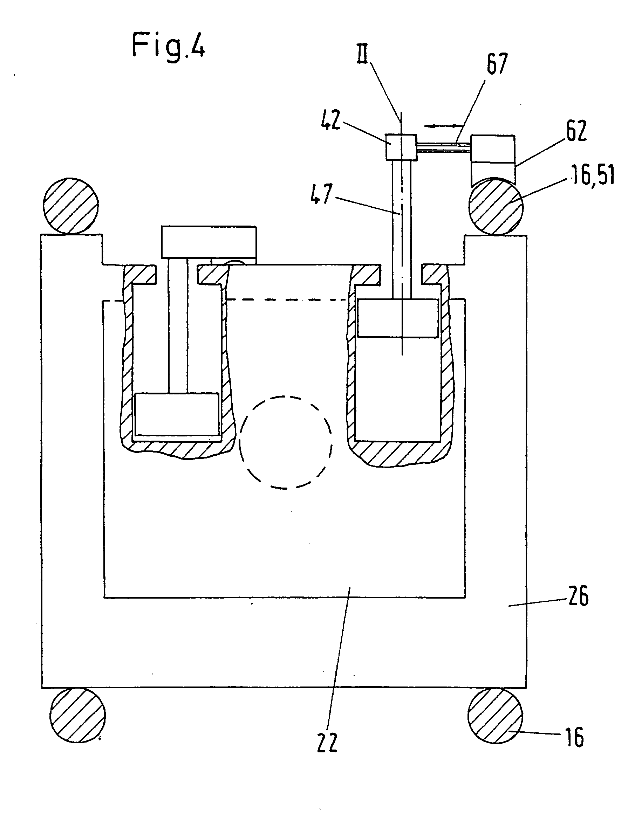

In der Figur 4 ist eine L-förmige Lasche 42 dargestellt, die über ein Gleitlager 62 sich auf einem Holm 16 bzw. 51 abstützt. Der eine Schenkel der L-förmigen Lasche 42 ist als stangenförmiges Bauteil 47 ausgestaltet, hier als Kolbenstange einer Kolben-Zylinder-Einheit. Diese L-Lasche 42 ist in Längserstreckung verschiebbar und um mindestens 90° um seine Längsachse II schwenkbar. Bei Einsatz dieser dreh- und verfahrbaren L-Lasche 42 besteht die Möglichkeit, die Formwerkzeughälfte 22 von der Seite her zwischen die Holme 16 einzubringen und anschließend die Halterungen 41-43 in Position zu fahren. Bei der vorliegenden Ausgestaltung ist der kurze Schenkel der L-Lasche 42 mit einem Spuränderungsteil 67 versehen. Mit diesem Spuränderungsteil 67 läßt sich die Formwerkzeughälfte zu der jeweiligen Werkzeugaufspannplatte konzentrisch zur Hauptachse I ausrichten.

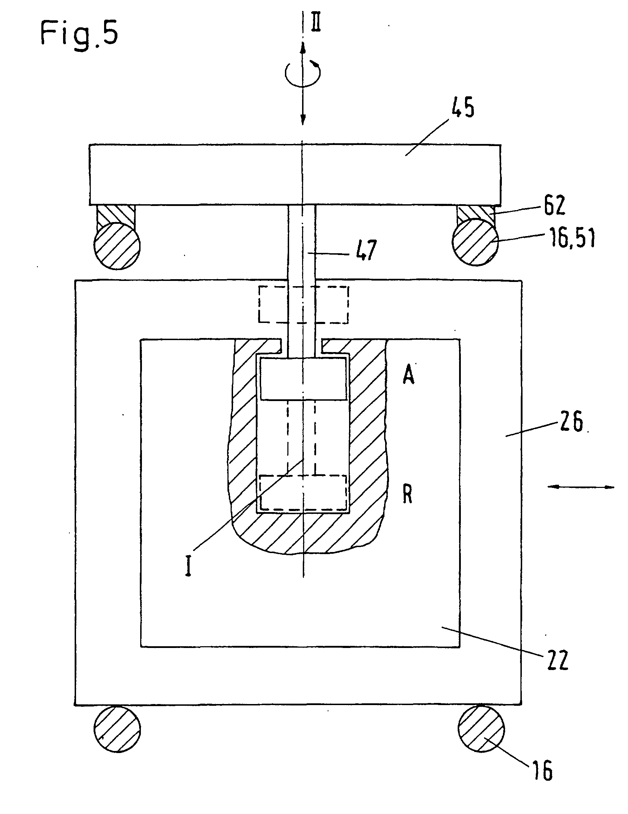

Eine weitere Variante zeigt die Figur 5, bei der ebenfalls ein stangenförmiges Bauteil 47 als Kolbenstange der Kolben-Zylinder-Einheit vorgesehen ist, die kopfseitig eine Traverse 45 besitzt, an der Gleitlager 62 vorgesehen sind. Während des Betriebes ist die Traverse 45 in Ausfahrstellung A und dabei im rechten Winkel zur Hauptachse I angeordnet. In Ruhestellung R ist die Kolben-Zylinder-Einheit eingefahren und die Traverse 45 befindet sich dabei achsparallel zur Hauptachse I, wobei die Traverse 45 so tief in den Bereich der Oberkante der Werkzeugspannplatte 26 eingefahren ist, daß sich die Formwerkzeughälfte 22 einschließlich der Werkzeugspannplatte 26 seitwärts aus dem Bereich der Holme 16 zum Wechseln des Werkzeugs verfahren läßt.

In der Figur 7 kommt eine T-Lasche 43 zum Einsatz, deren einer Querschenkel in Form eines Hakens ausgebildet ist, der mit einer Klaue 53 korrespondiert. Die Klaue 53 ist Teil eines Verschiebeelementes 56, welches in einer Lagerhülse 54 angeordnet ist, die am Kopf der Werkzeugplatte 12, 13 befestigt ist. Die Verschiebeeinheit 56 läßt sich dabei (nicht weiter dargestellt) parallel zur Hauptachse I verschieben, so daß Kräfte, die beim Aufreißen der Formwerkzeughälften 22, 23 gerade bei Abfall eines der Magnete 31 oder 32 auftreten, keine Beschädigungen für eine der Werkzeugaufspannplatten 12, 13 hervorrufen.

### Positionsliste

### Spritzgießmaschine

- 11: Schließeinheit
- 12: Feststehende Werkzeugaufspannplatte
- 13: Bewegliche Werkzeugaufspannplatte
- 14: Werkzeugtisch
- 15: Gegenplatte
- 16: Holme
- 17: Nase
- 18: Zapfen

### Werkzeug

- 21: Werkzeugblock
- 22: Formwerkzeughälfte zu 12
- 23: Formwerkzeughälfte zu 13
- 24: Zentrierung
- 25: Aufwerkstange
- 26: Werkzeugspannplatte (22)
- 27: Werkzeugspannplatte (23)
- 28 29: Trennebene

### Werkzeugspanneinrichtung

- 31: Magnetische Werkzeugspanneinrichtung (fest 12)
- 32: Magnetische Werkzeugspanneinrichtung (bewegliche 13)

### Halterungen

- 41: Lasche
- 42: L-Lasche
- 43: T-Lasche
- 44: Z-Lasche
- 45: Traverse
- 46: Aufhängung
- 47: Stangenförmiges Bauteil
- 48: Hülsenförmiges Bauteil
- 49: Schlaufe

### Fangelemente

- 51: Holm
- 52: Tragarm
- 53: Loslager (51), Klaue
- 54: Lagerhülse
- 56: Verschiebeelement

### Lagerelemente

- 61: Rollenlager
- 62: Gleitlager
- 63: Oberlagerung
- 64: Unterlagerung
- 65: Schwenkeinrichtung (61)
- 66: Längenänderungsteil (62)
- 67: Spuränderungsteil

### Dämpfungselemente

- 71: Federn
- 72: Kolbenzylindereinheit
- 73: Aktuator
- I: Hauptachse
- II: Längsachse
- A: Anfahrstellung
- R: Ruhestellung
- S: Schwerpunkt

## Patentansprüche

1. Verfahren zum Positionieren der Formwerkzeuge in der Schließeinheit einer eine feststehende (12) und eine bewegliche (13) Werkzeugaufspannplatte aufweisenden Spritzgießmaschine mit kraftschlüssiger, insbesondere magnetischer Werkzeugspanneinrichtung, wobei
bei abgeschalteter Werkzeugeinspannung die Formwerkzeughälften (22,23) in Hauptachsrichtung (I) zu den Werkzeugaufspannplatten (12,13) frei bewegbar sind und
a) beim Einrichten der Werkzeuge
a1) die Formwerkzeuge in den Freiraum zwischen den Werkzeugaufspannplatten (12,13) geführt werden
a2) bei Erreichen des Arbeitsbereiches die einzelnen Formwerkzeughälften (22,23) kippfrei abgelegt werden
a3) anschließend die Spannkraft auf die Werkzeugspanneinrichtung aufgebracht wird, und
b) bei spontanem Ausfall der kraftschlüssigen Verbindung zwischen Formwerkzeughälfte und Werkzeugaufspannplatte
b1) die einzelnen Formwerkzeughälften aufgefangen werden und
b2) der Betrieb der Schließeinheit (11) der Spritzgießmaschine unterbrochen wird.

2. Verfahren nach Anspruch 1,
**dadurch gekennzeichnet,**
**dass** das Ablegen bzw. Auffangen gedämpft erfolgt.

3. Verfahren nach Anspruch 1,
**dadurch gekennzeichnet,**
**dass** nach dem kraftschlüssigen Verbinden der Formwerkzeuge mit den Werkzeugaufspannplatten die Abstützkraft mindestens reduziert wird.

4. Spritzgießmaschine mit einer feststehenden (12) und einer beweglichen (13) Werkzeugaufspannplatte und einer Schließeinheit (11) mit kraftschlüssiger, insbesondere magnetischer Werkzeugspanneinrichtung,
zur Durchführung des Verfahrens nach Anspruch 1,
**dadurch gekennzeichnet,**
**dass** formschlüssige Fangelemente (51,52) vorgesehen sind, welche mit den Werkzeugaufspannplatten (12, 13) in Verbindung bringbar sind und bei nichtaktiver kraftschlüssiger Werkzeugspanneinrichtung (31, 32) an an den Formwerkzeughälften (22, 23) vorgesehenen Halterungen (41-45) greifen.

5. Spritzgießmaschine nach Anspruch 4,
**dadurch gekennzeichnet,**
**dass** die Fangelemente Holme (51) sind, die die feststehende und die bewegliche Formaufspannplatte (12, 13) miteinander verbinden,
**dass** die Halterungen (41,42) zu beiden Seiten an den Formwerkzeughälften (22, 23) vorgesehen sind, mit denen diese auf den Holmen (51) auflegbar sind, und dass zwischen den Halterungen (41,42) und den Holmen (51) Lagerelemente (61, 62) angeordnet sind, die eine behinderungsarme Horizontalbewegung der Werkzeugaufspannplatten (12, 13) in Hauptachsrichtung (I) zulassen.

6. Spritzgießmaschine nach Anspruch 4,
**dadurch gekennzeichnet,**
**dass** die Fangelemente Tragarme (52) sind, die mit den Halterungen (43,44) in Verbindung stehen, und
**dass** die Formwerkzeughälften (22, 23) zu den jeweiligen Werkzeugaufspannplatten (12, 13) behinderungsarm horizontal in Hauptachsrichtung (I) bewegbar sind.

7. Spritzgießmaschine nach einem der Ansprüche 4 bis 6,
**dadurch gekennzeichnet,**
**dass** die Halterungen (42,43) eine Erstreckung parallel zur Hauptachse (I) der Schließeinheit (11) aufweisen und jeweils zwei Lagerelemente (61, 62) zum Abstützen besitzen, die ein Kippen der jeweiligen Formwerkzeughälften (22, 23) verhindem.

8. Spritzgießmaschine nach Anspruch 7,
**dadurch gekennzeichnet,**
**dass** die Lagerelemente (61, 62) in der Weise angeordnet sind, dass die Lager den gleichen Abstand zum Schwerpunkt der einzelnen Werkzeugaufspannplatten (12, 13) aufweisen.

9. Spritzgießmaschine nach einem der Ansprüche 4 bis 8,
**dadurch gekennzeichnet;**
**dass** die Halterungen (41,42) über eine Traverse (45) miteinander verbunden sind, und dass zwischen der Traverse (45) und den Formwerkzeughälften (22,23) eine Aufhängung (46) vorgesehen ist.

10. Spritzgießmaschine nach Anspruch 9,
**dadurch gekennzeichnet,**
**dass** die Aufhängung (46) Bauteile (47, 48) aufweist, mit denen die Längserstreckung der Aufhängung (46) veränderbar ist.

11. Spritzgießmaschine nach einem der o.g. Ansprüche 4 bis 8,
**dadurch gekennzeichnet,**
**dass** zwischen den Halterungen (42,43) und den Formwerkzeughälften (22, 23) Dämpfungselemente (71, 72) angeordnet sind.

12. Spritzgießmaschine nach Anspruch 11,
**dadurch gekennzeichnet,**
**dass** die Dämpfungselemente über Aktuaktoren (73) schaltbare Kolben-Zylinder-Einheiten sind.

13. Spritzgießmaschine nach einem der Ansprüche 4 bis 6,
**dadurch gekennzeichnet,**
**dass** die Halterungen als L-Laschen (42) in der Weise mit den Fangelementen (51-53) verbunden sind, dass die L-Laschen (42) zu den jeweiligen Formwerkzeughälften (22, 23) vertikal verschiebbar und um ihre Verschiebeachse um mindestens 90° verdrehbar sind.

14. Spritzgießmaschine nach einem der Ansprüche 4 bis 6,
**dadurch gekennzeichnet,**
**dass** die Halterungen eine Traverse (45) aufweisen, bei der beidendig mindestens je ein Auflager (61, 62) vorgesehen ist und die eine Stange (47) besitzt, welche mit der jeweiligen Formwerkzeughälfte (22, 23) verbunden ist.

15. Spritzgießmaschine nach Anspruch 5,
**dadurch gekennzeichnet,**
**daß** bei seitlicher Zuführung der Formwerkzeughälften (22, 23) in den Freiraum zwischen der beweglichen und der feststehenden Werkzeugaufspannplatte (11, 12) die während des Einfahrens der Formwerkzeughälften (22, 23) von der Spritzgießmaschine wegweisende Halterung (41-44) in der Weise ausgestattet ist, dass in der Betriebsphase der Werkzeugspannung die Halterungen den Holm (16) von außen umgreift.

16. Spritzgießmaschine nach Anspruch 6,
**dadurch gekennzeichnet,**
**dass** kopfendig an den Formaufspannplatten (12, 13) Ober- und Unterlagerungen (63, 64) vorgesehen sind,
**dass** der Tragarm (52) kopfendig beweglich mit der als Lasche (41) ausgebildeten Halterung verbunden ist, und
**dass** anderenends der Tragarm (52) zwischen das Oberlager (63) und das Unterlager (64) führbar und zwischen diesen horizontal bewegbar ist.

17. Spritzgießmaschine nach Anspruch 6,
**dadurch gekennzeichnet,**
**dass** der Tragarm (52) aus dem Raum oberhalb des Freiraums zwischen den Werkzeugaufspannplatten (12, 13) bringbar ist und
**dass** die Halterung als Z-Lasche (44) ausgebildet ist, die über Lagerelemente (61, 62) mit dem Tragarm (52) horizontal bewegbar verbindbar ist.

18. Spritzgießmaschine nach Anspruch 17,
**dadurch gekennzeichnet,**
**dass** am Fußende des Tragarms (52) eine Lagerhülse (54) vorgesehen ist, die mit einem an der jeweiligen Formaufspannplatte (12, 13) befestigten Zapfen (18) korrespondiert.

19. Spritzgießmaschine nach einem der Ansprüche 4 bis 18,
**dadurch gekennzeichnet,**
**dass** mindestens ein Spuränderungsteil (67) zur horizontalen Lageänderung der Lagerelemente (61, 62) senkrecht zur Hauptachse (I) vorgesehen ist.

## Claims

1. Method of positioning the moulding tools in the closing unit of an injection moulding machine having a fixed (12) and a moving (13) tool mounting plate having a non-positively locking, in particular magnetic tool clamping device, wherein when tool clamping is switched off the moulding tool halves (22, 23) are freely movable and
a) during fitting of the tools
a1) the moulding tools are guided in the clearance between the tool mounting plates (12, 13)
a2) when the working region is reached, the individual moulding tool halves (22, 23) are deposited in a tilt-free manner
a3) then the clamping force is applied to the tool clamping device, and
b) in the case of spontaneous failure of the non-positive connection between the moulding tool half and the tool mounting plate
b1) the individual moulding tool halves are intercepted and
b2) operation of the closing unit (11) of the injection moulding machine is interrupted.

2. Method according to claim 1, **characterised in that** depositing and interception are damped.

3. Method according to claim 1, **characterised in that** after non-positive connection of the moulding tools to the tool mounting plates the supporting force is at least reduced.

4. Injection moulding machine having a fixed (12) and a moving (13) tool mounting plate and a closing unit (11) having a non-positively locking, in particular magnetic tool clamping device, for carrying out the method according to claim 1, **characterised in that** positively locking intercepting elements (51, 52) are provided, which can be brought into engagement with the tool clamping plates (12, 13) and, in the case of non-action of the non-positively locking tool clamping device (31, 32), grab on to holding elements provided on the moulding tool halves (22, 23).

5. Injection moulding machine according to claim 4, **characterised in that** the intercepting elements are spars (51) which join the fixed and moving mould mounting plates (12, 13) together, **in that** the holding elements (41, 42) are provided on both sides of the moulding tool halves (22, 23), with which these can be laid on the spars (51), and **in that** between the holding elements (41, 42) and the spars (51), bearing elements (61, 62) are provided, which permit low-resistance horizontal movement of the tool mounting plates (12, 13) in the main axial direction (1).

6. Injection moulding machine according to claim 4, **characterised in that** the intercepting elements are carrying arms (52), which are connected to the holding elements (43, 44), and **in that** the moulding tool halves (22, 23) are movable with respect to the respective tool mounting plates (12, 13) with low resistance, horizontally in the main axial direction (1).

7. Injection moulding machine according to one of claims 4 to 6, **characterised in that** the holding elements (42, 43) extend parallel to the main axis (1) of the closing unit (11) and each have two bearing elements (61, 62) for supporting, which prevent tilting of the respective moulding tool halves (22, 23).

8. Injection moulding machine according to claim 7, **characterised in that** the bearing elements (61, 62) are so arranged that the bearings have the same distance from the point of gravity of the individual tool mounting plates (12, 13).

9. Injection moulding machine according to one of claims 4 to 8, **characterised in that** the holding elements (41, 42) are connected together via a crossbeam (45), and **in that** a suspension (46) is provided between the crossbeam (45) and the moulding tool halves (22, 23).

10. Injection moulding machine according to claim 9, **characterised in that** the suspension (46) has components (47, 48) with which the longitudinal extent of the suspension (46) is variable.

11. Injection moulding machine according to one of the preceding claims 4 to 8, **characterised in that** damping elements (71, 72) are disposed between the holding elements (42, 43) and the moulding tool halves (22, 23).

12. Injection moulding machine according to claim 11, **characterised in that** the damping elements are piston-cylinder units which are engageable via actuators (73).

13. Injection moulding machine according to one of claims 4 to 6, **characterised in that** the holding elements are connected as L-shaped plates (42) to the intercepting elements (52-53) in such a manner that the L-shaped plates (42) are vertically displaceable relative to the respective moulding tool halves (22, 23) and are rotatable about their axis of displacement through at least 90°.

14. Injection moulding machine according to one of claims 4 to 6, **characterised in that** the holding elements have a crossbeam (45), which is provided at both ends with at least one support (61, 62) and which has a rod (47) connected to the respective moulding tool half (22, 23).

15. Injection moulding machine according to claim 5, **characterised in that** if there is lateral feeding of the moulding tool halves (22, 23) into the clearance between the moving and the fixed tool mounting plates (11, 12), the holding element (41-44) facing away from the injection moulding machine during insertion of the moulding tools halves (22, 23) is so formed that, while tool clamping is in operation, the holding elements encompass the spar (16) from the exterior.

16. Injection moulding machine according to claim 6, **characterised in that** upper and lower bearings (63, 64) are provided at the top of the mould mounting plates (12, 13), **in that** the carrying arm (52) is connected movably at the top to the holding element formed as a plate (41), and that at the other end the carrying arm (52) is guidable between the upper bearing (63) and the lower bearing (64) and is movable horizontally between the same.

17. Injection moulding machine according to claim 6, **characterised in that** the carrying arm (52) can be moved out of the space above the clearance between the tool mounting plates (12, 13), and **in that** the holding element is formed as a Z-shaped plate (44), which is horizontally movably connectable to the carrying arm (52) via bearing elements (61, 62).

18. Injection moulding machine according to claim 17, **characterised in that** at the bottom end of the carrying arm (52) a bearing sleeve (54) is provided, which corresponds to a pin (18) fixed to the respective mould mounting plate (12, 13).

19. Injection moulding machine according to one of claims 4 to 18, **characterised in that** at least one gauge-changing part (67) is provided perpendicular to the main axis (1) for horizontally changing the position of the bearing elements (61, 62).

## Revendications

1. Procédé pour le positionnement des outils de formage dans l'unité de fermeture d'une machine de coulée par injection présentant une plaque de serrage d'outil fixe (12) et une plaque de serrage d'outil mobile (13), ayant un dispositif de serrage d'outil sous l'influence d'une force, en particulier magnétique, les moitiés (22, 23) de l'outil de formage étant librement déplaçables dans la direction axiale principale (I) par rapport aux plaques de serrage d'outil (12, 13) lorsque le serrage d'outil est hors service, et
a) lors de l'installation des outils
a1) les outils de formage sont guidés dans l'espace libre entre les plaques de serrage d'outil (12, 13)
a2) lorsque la zone de travail est atteinte, les moitiés individuelles (22, 23) de l'outil de formage sont déposées sans basculement
a3) ensuite, la force de serrage est appliquée sur le dispositif de serrage d'outil, et
b) lors d'une défaillance spontanée de la liaison sous l'influence d'une force entre les moitiés de l'outil de formage et la plaque de serrage d'outil
b1) les moitiés individuelles de l'outil de formage sont saisies, et
b2) le fonctionnement de l'unité de fermeture (11) de la machine de coulée par injection est interrompu.

2. Procédé selon la revendication 1,
**caractérisé en ce que** la dépose ou la saisie est effectuée de façon amortie.

3. Procédé selon la revendication 1,
**caractérisé en ce que**, après la liaison sous l'influence d'une force des outils de formage avec les plaques de serrage d'outil, la force d'appui est au moins réduite.

4. Machine de coulée par injection comportant une plaque de serrage d'outil fixe (12) et une plaque de serrage d'outil mobile (13), et une unité de fermeture (11) ayant un dispositif de serrage d'outil sous l'influence d'une force, en particulier magnétique, pour la mise en oeuvre du procédé selon la revendication 1,
**caractérisée en ce que** des éléments d'arrêt (51, 52) par coopération de formes sont prévus, lesquels peuvent être amenés en liaison avec les plaques de serrage d'outil (12, 13) et, lorsque le dispositif de serrage d'outil (31, 32) sous l'influence d'une force n'est pas actif, s'engagent sur des supports (41 - 45) prévus sur les moitiés (22, 23) de l'outil de formage.

5. Machine de coulée par injection selon la revendication 4, **caractérisée en ce que** les éléments d'arrêt sont des longerons (51) qui relient ensemble les plaques de serrage d'outil fixe et mobile (12, 13), **en ce que** les supports (41, 42) sont prévus des deux côtés sur les moitiés (22, 23) de l'outil de formage, grâce auxquels celles-ci peuvent être posées sur les longerons (51), et **en ce que**, entre les supports (41, 42) et les longerons (51), il est agencé des éléments de palier (61, 62) qui permettent un déplacement horizontal non gêné des plaques de serrage d'outil (12, 13) dans la direction axiale principale (I).

6. Machine de coulée par injection selon la revendication 4, **caractérisée en ce que** les éléments d'arrêt sont des bras de support (52) qui sont en liaison avec les supports (43, 44), et **en ce que** les moitiés (22, 23) de l'outil de formage sont déplaçables de façon non gênée horizontalement dans la direction axiale principale (I) par rapport aux plaques de serrage d'outil respectives (12, 13).

7. Machine de coulée par injection selon une des revendications 4 à 6,
**caractérisée en ce que** les supports (42, 43) présentent une extension parallèlement à l'axe principal (I) de l'unité de fermeture (11) et possèdent, à chaque fois, deux éléments de palier (61, 62) pour l'appui, qui empêchent un basculement des moitiés respectives (22, 23) de l'outil de formage.

8. Machine de coulée par injection selon la revendication 7, **caractérisée en ce que** les éléments de palier (61, 62) sont agencés de façon que les paliers présentent la même distance par rapport au centre de gravité des plaques de serrage d'outil individuelles (12, 13).

9. Machine de coulée par injection selon une des revendications 4 à 8,
**caractérisée en ce que** les supports (41, 42) sont reliés ensemble par l'intermédiaire d'une traverse (45), et **en ce que**, entre la traverse (45) et les moitiés (22, 23) de l'outil de formage, il est prévu une suspension (46).

10. Machine de coulée par injection selon la revendication 9, **caractérisée en ce que** la suspension (46) présente des pièces (47, 48) grâce auxquelles l'extension longitudinale de la suspension (46) peut être modifiée.

11. Machine de coulée par injection selon une des revendications précitées 4 à 8,
**caractérisée en ce que**, entre les supports (42, 43) et les moitiés (22, 23) de l'outil de formage, sont agencés des éléments d'amortissement (71, 72).

12. Machine de coulée par injection selon la revendication 11, **caractérisée en ce que** les éléments d'amortissement sont des vérins commutables par l'intermédiaire d'actionneurs (73).

13. Machine de coulée par injection selon une des revendications 4 à 6, **caractérisée en ce que** les supports en tant que pattes en L (42) sont reliés aux éléments d'arrêt (51 - 53) de façon que les pattes en L (42) puissent être verticalement déplaçables par rapport aux moitiés respectives (22, 23) de l'outil de formage et puissent tourner autour de leur axe de déplacement d'au moins 90°.

14. Machine de coulée par injection selon une des revendications 4 à 6,
**caractérisée en ce que** les supports présentent une traverse (45) pour laquelle, aux deux extrémités, il est prévu au moins, à chaque fois, un appui (61, 62), et qui possède une barre (47) qui est reliée aux moitiés respectives (22, 23) de l'outil de formage.

15. Machine de coulée par injection selon la revendication 5, **caractérisée en ce que**, lors de l'amenée latérale des moitiés (22, 23) de l'outil de formage dans l'espace libre entre les plaques de serrage d'outil mobile et fixe (11, 12), le support (41 - 44) éloigné de la machine de coulée par injection pendant l'introduction des moitiés (22, 23) de l'outil de formage est réalisé de sorte que, dans la phase de fonctionnement du serrage d'outil, les supports entourent le longeron (16) de l'extérieur.

16. Machine de coulée par injection selon la revendication 6, **caractérisée en ce que**, à l'extrémité de tête, sur les plaques de serrage d'outil (12, 13), il est prévu des paliers supérieur et inférieur (63, 64), **en ce que** le bras de support (52) est relié, à l'extrémité de tête, de façon mobile au support réalisé comme patte (41), et **en ce que**, à l'autre extrémité, le bras de support (52) peut être guidé entre le palier supérieur (63) et le palier inférieur (64) et est déplaçable horizontalement entre ceux-ci.

17. Machine de coulée par injection selon la revendication 6, **caractérisée en ce que** le bras de support (52) peut être amené de l'espace au-dessus de l'espace libre entre les plaques de serrage d'outil (12, 13) et **en ce que** le support est réalisé comme patte en Z (44) qui peut être reliée de façon horizontalement mobile, par l'intermédiaire d'éléments de palier (61, 62), au bras de support (52).

18. Machine de coulée par injection selon la revendication 17, **caractérisée en ce que**, à l'extrémité de pied du bras de support (52), il est prévu un manchon (54) qui correspond à un tourillon (18) fixé à la plaque de serrage d'outil respective (12, 13).

19. Machine de coulée par injection selon une des revendications 4 à 18,
**caractérisée en ce qu'**au moins une pièce de modification d'écartement (67) pour la modification de position horizontale des éléments de palier (61, 62) perpendiculairement à l'axe principal (I) est prévue.
